# EUROPEAN PATENT APPLICATION

(11) **EP 0 590 189 A1**
(43) Date of publication of application: **06.04.1994**
(21) Application number: 92116729.2
(22) Date of filing: 30.09.1992
(51) Int. Cl.: D06N 7/00

(54) **Tile-shaped carpet**

(71) Applicant: SINCOL CO., LTD., Ishikawa-ken 920-02 (JP)
(72) Inventor: Imanishi, Yoshinari, c/o Sincol Co., Ltd., Kanazawa-shi, Ishikawa-ken 920-02 (JP)
(74) Representative: Goddar, Heinz J., Dr.

(57) **Abstract**

A tile-shaped carpet (C) comprises a backing member (1) and an upper layer (3) formed on the backing member, both of which are made of a propylene resin. The backing member (1) may be made of a material which comprises a regenerated product of a propylene resin, preferably an amorphous alpha-olefin copolymer. In this case, the upper layer (3) may be made either of a fresh propylene resin or the regenerated resin product. The carpet (C) does not generate any toxic gas when burnt, so that problems involved in prior art carpets such as an ecological problem and generation of toxic gases on burning of the carpets can be avoided.

## Description

The present invention relates to a tile-shaped carpet which is used to cover floors.

A tile-shaped carpet is a kind of tile piece which is cut to have a size of 50 cm x 50 cm. This type of carpet has started to spread in view of the necessity of wire accommodation in the floor for office automation. The tile-shaped carpet has the sectional structure which has a plate or mat-shaped backing member and a surface layer formed on the member. The surface layer is usually made of a base fabric layer and a pile layer. The tile-shaped carpet is broadly classified into a tufted, tile-shaped carpet, a needle punched, tile-shaped carpet, a bonded tile-shaped carpet and an electrodeposited, tile-shaped carpet.

The known tile-shaped carpet has ordinarily made use of a bitumen or asphalt backing member. Recently, those carpets using a vinyl chloride resin packing member have been predominantly employed and amount to 95% of all the tile-shaped carpets.

Where tile-shaped carpets are thrown away, they are usually incinerated or used as a land-fill material. According to the incineration method, the vinyl chloride resin member is burnt to generate toxic chlorine gas (600 ppm), resulting not only in ecological problems, but also in the likelihood of the incinerator being damaged owing to the high burning temperatures with an attendant rise of costs.

In general, the tile-shaped carpet has a weight of about 5 kg/m² and the total amount of the thrown-away carpet pieces per year reaches about 0.1 billion ton. Under the circumstances where it becomes difficult to maintain land-filling areas, the use of the thrown-away carpet pieces as the land-filling materials is not always appropriate.

Accordingly, it may occur to recycle tile-shaped carpets. In view of the types of materials used in existing tile-shaped carpets, however, regeneration of the materials entails a decrease in the molecular weight of the material. This leads to the unlikelihood of the stable and high-quality material being obtained by the regeneration. Such a material is of no practical value. Hence, recycling of the carpets has not been generally accepted.

Aside from the throw-away problem, the generation of chlorine gas during the fires in offices or airplanes is toxic and dangerous. There arises the very serious problem that many lives may be sacrificed. In addition, the generation of chlorine in large amounts will corrode terminals of electronic instruments and seriously damage computers.

It is accordingly an object of the invention to provide a tile-shaped carpet which overcomes the problems of the prior art tile-shaped carpets.

It is another object of the invention to provide a tile-shaped carpet wherein no toxic gas is generated when the piece is burnt and which is light in weight and inexpensive.

It is a further object of the invention to provide a tile-shaped carpet which can be reused as a recycled carpet piece.

According to one embodiment of the invention, there is provided a tile-shaped carpet which comprises a backing member and an upper layer formed on the backing member, both of which are made of a propylene resin. Preferably, the upper layer includes a base fabric sub-layer and a pile sub-layer, both of which are made of the propylene resin.

According to another embodiment of the invention, there is also provided a tile-shaped carpet which comprises a backing member which is made of a regenerated product of an propylene resin, and an upper layer formed on the backing member. Preferably, the regenerated product is made of an amorphous alpha-olefin copolymer. The upper layer may be made either of a non-regenerated or virgin propylene resin or a regenerated propylene resin. In this case, the upper layer is preferably made of a base fabric sub-layer and a pile sub-layer.

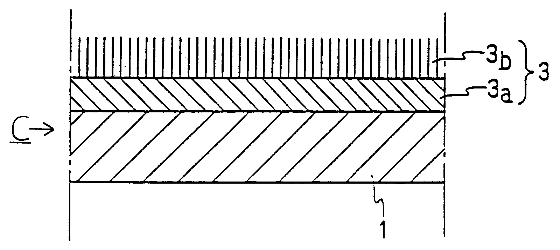

The sole figure is a sectional view showing a tiled carpet piece according to the invention.

Reference is now made to the accompanying drawing in which there is shown a section of a typical tile-shaped carpet piece C. The carpet piece C includes a backing member 1 and upper layer 3 formed on the member 1. The upper layer 3 includes a base fabric sub-layer 3a and a pile layer 3b.

It should be noted that the carpet piece C is not critical with respect to the structure and shape. For instance, the upper layer 3 may be made of a woven fabric layer, a knitted article layer, a non-woven fabric layer or a composite layer thereof, or a velour fabric layer with or without the base fabric sub-layer 3a. If the velour fabric layer is used, the base fabric sub-layer 3a is essential. More particularly, velour fibers of the velour fabric layer are bonded to the base fabric sub-layer 3a at the root thereof so that the velour fibers are prevented from dropping off.

In the first embodiment of the invention, the backing member 1 is made of a propylene resin. This member 1 may be formed by extrusion molding. The upper layer 3 includes the base fabric layer 3a which is preferably made of a non-woven fabric of polypropylene fibers. The pile layer 3b is formed on the base fabric layer 3a by tufting polypropylene fiber yarns. For the tufting and the bonding of the upper layer 3 to the backing member 1, there are generally used polypropylene adhesives.

As is known in the art, a propylene resin is a polymer constituted of carbon and hydrogen atoms. Hence, when polypropylen is burnt, no chlorine gas is generated and there is little possibility of generating other toxic gases.

The propylene resin has excellent tensile and impact strengths and good heat and flexing resistances and good electric characteristics. In addition, polypropylene has very good workability. Thus, this polymer is very suitable for use as the backing member and the upper layer of the tile-shaped carpet. Moreover, when the polymer is recovered by generation, its molecular weight does not lower.

The term "propylene resin" used herein is intended to mean a propylene homopolymer, and copolymers of propylene and ethylene, butene-1 or the like. This is true of the polypropylene fibers and adhesives. In the first embodiment, the polypropylene fibers are preferably made of propylene homopolymer and the backing member may be made of either propylene homopolymer or the copolymer.

In the second embodiment of the invention, the backing member 1 is made of a material which comprises a regenerated product of the propylene resin. The material may consist of the regenerated product alone. Preferably, the material should comprise from 25 to 30 wt.% of the regenerated product and correspondingly from 75 to 70 wt.% of a fresh propylene resin. It is also preferred to use an amorphous alpha-olefin copolymer of propylene and ethylene or butene-1 as the propylene resin in this embodiment.

The upper layer 3 made of the base fabric sub-layer 3a and the pile layer 3b is preferably made of a non-regenerated propylene resin as in the first embodiment although a regenerated polypropylen product may be used; if desired.

The amorphous alpha-olefin copolymer has a number of advantages such as the ease in control of the copolymer composition and molecular weight depending on the purpose in end use and the ease in control of the quality. Accordingly, the copolymer is suitable for use as a backing member of tile-shaped carpet. More particularly, the amorphous alpha-olefin copolymer has the following characteristic features.
a. It is possible to obtain a diversity of polymer grades.
b. The copolymer has precisely controlled melt viscosity, softening point and penetration.
c. The copolymer has a reduced content of catalytic residues (metal, chlorine and the like)
d. The copolymer is substantially free of moisture and solvent.
e. The copolymer has good low temperature characteristics.

The recovery of the propylene resin of the backing member of the tile-shaped carpet for recycling may be effected by the following procedures.

According to one procedure, used carpet pieces are washed, from which metal pieces are removed. The pieces are mounted on a conveyor through which a hot medium heated, for example, at 200 °C is passed to melt the backing member alone thereby collecting the melt of the backing member. If necessary, a fresh propylene resin is charged into the melt and transferred to a heating tank, followed by agitating at a temperature of about 200 °C to obtain a regenerated melt. In this case, it is preferred that the washed pieces are first mounted on a metal qauze and then melted by heated. By thus, substantially 100% of the resin can be recovered.

Alternatively, the backing members of carpet pieces may be divided into fine pieces and dissolved in a solvent such as an ether or acetone to recover the resin.

In practical applications, it is preferred that the regenerated resin is used in an amount of from 25 to 30 wt.%, to which correspondingly 75 to 70 wt.% of a fresh resin is added.

The present invention is more particularly described by way of the following example.

A backing member was extrusion molded to obtain a backing member using a regenerated propylene homopolyer. Then, an upper layer made of a regenerated propylene homopolymer and having two sub-layers as shown in the sole figure was formed to obtain tile-shaped carpet piece A of the invention. As stated above, the piece A was made of 100% regenerated propylene homopolymer.

The above procedure was repeated except that the backing member was made of a regenerated product of an amorphous alpha-olefin copolymer and the sub-layers were each made of propylene homopolymer, thereby obtaining tile-shaped carpet piece B of the invention.

For comparison, known bitumen tile-shaped carpet piece using an asphalt backing member and PVC tile-based carpet piece using a vinyl chloride resin backing member were made.

The respective carpet pieces were subjected to measurements of recycling properties, physical and electric characteristics and contents of toxic gases when burnt.

The results are shown in Table below.

**Table**

| | Carpet A of Invention | Carpet B of Invention | Bitumen tile-shaped carpet | PVC tile-shaped carpet |
|---|---|---|---|---|
| Recycle | yes | yes | no | no |
| Recycling Rate | 80% | 100% | - | - |
| Recycling Number | 2 | 3 | - | - |
| Yarn removal str. (determined by the method of JIS L1021) | 2.32 kgf | 2.34 kgf | 1.87 kgf | 2.30 kgf |
| Chargeability (determined by the method of JIS L1021) | ± 2.0 | ± 0.2 | ± 0.2 | ± 0.2 |
| Weight (kg/cm²) | 3.1 | 3.2 | 4.8 | 5.0 |
| Cost index | 80 | 100 | 130 | 120 |
| Content of HCL after burning (determined by the NBS tester) | 2 ppm | 2 ppm | 2 ppm | 800 ppm |
| Content of CO after burning (determined by the NBS tester) | 110 ppm | 100 ppm | 200 ppm | 380 ppm |
| Content of HCN after burning (determined by the NBS tester) | 1 ppm | 1 ppm | 2 ppm | 5 ppm |

As will be apparent from above table, the carpets A and B of the invention can be recycled. However, with the known carpets, the regenerated products are not possible to recycle because physical stability cannot be obtained.

Accordingly, the recycle rate and the number of recycles are nil for the known counterparts.

The cycle rate amounts to 80% and 100% for the carpets A and B of the invention, respectively. The recycle rate means a rate of a usable resin regenerated.

Two or three recyclings are possible for the carpets of the invention, which leads to significant saving of natural resources.

Two carpets of the invention are comparable to the known carpets with respect to the yarn removal strength and the chargeability. The carpets of the invention are conveniently lighter in weight than known ones.

With respect to the generation of chlorine gas, the carpets of the invention are equal to the bitumen carpet and are significantly smaller in amount than the PVC carpet. The carpets of the invention are superior in other gas generation to the carpets for comparison.

The features disclosed in the foregoing description, in the claims and/or in the accompanying drawings may, both, separately and in any combination thereof, be material for realising the invention in diverse forms thereof.

## Claims

1. A tile-shaped carpet (C) which comprises a backing member (1) and an upper layer (3) formed on the backing member (1), both of which are made of a propylene resin.

2. The carpet according to claim 1, wherein said propylene resin is propylene homopolymer.

3. The carpet according to claim 1, wherein said propylene resin consists of an amorphous copolymer of propylene and a member selected from the group consisting of ethylene and butene-1.

4. The carpet according to claim 1, wherein said upper layer (3) has a base fabric sub-layer (3a) and a pile sub-layer (3b) formed on said base fabric sub-layer.

5. A tile-shaped carpet which comprises a backing member (1) which is made of a material which comprises a regenerated product of a propylene resin, and an upper layer (3) formed on the backing member.

6. The carpet according to claim 5, wherein said propylene resin consists of a copolymer of propylene and ethylene or butene-1.

7. The carpet according to claim 5, wherein said propylene resin consists of a propylene homopolymer.

8. The carpet according to claim 5, wherein said material consists of a mixture of said regenerated product and a fresh propylene resin.

9. The carpet according to claim 8, wherein said mixture comprises from 25 to 30 wt.% of said regenerated product and the balance being said fresh propylene resin.

10. The carpet according to claim 8, wherein said material consists of said regenerated product.

11. The carpet according to claim 10, wherein said regenerated product consists of a copolymer of propylene and ethylene or butene-1.

12. The carpet according to claim 10, wherein said propylene resin consists of a propylene homopolymer.

13. The carpet according to claim 5, wherein said upper layer (3) has a base fabric sub-layer (3a) and a pile sub-layer (3b).

14. The carpet according to claim 5, wherein said upper layer (3) is made of a material which comprises a regenerated product of a propylene resin.

15. The carpet according to claim 14, wherein said material consists of a mixture of said regenerated product and a fresh propylene resin.

16. The carpet according to claim 14, wherein said mixture comprises from 25 to 30 wt.% of said regenerated product and the balance being said fresh propylene resin.

17. The carpet according to claim 14, wherein said material consists of said regenerated product.

18. The carpet according to claim 17, wherein said regenerated product consists of a copolymer of propylene and ethylene or butene-1.

19. The carpet according to claim 17, wherein said propylene resin consists of a propylene homopolymer.
